(19) Europäisches Patentamt
European Patent Office
Office européen des brevets

(11) EP 3 575 330 B1

(12) **EUROPEAN PATENT SPECIFICATION**

(45) Date of publication and mention of the grant of the patent:
**17.02.2021 Bulletin 2021/07**

(21) Application number: **19176679.9**

(22) Date of filing: **27.05.2019**

(51) Int Cl.:
***C08C 19/25*** *(2006.01)*
***C08K 3/36*** *(2006.01)*
***C08L 9/06*** *(2006.01)*
***C08L 45/00*** *(2006.01)*
***C08K 5/548*** *(2006.01)*
***B60C 1/00*** *(2006.01)*
***C08L 9/00*** *(2006.01)*
***C08L 23/24*** *(2006.01)*
***C08K 3/04*** *(2006.01)*

# (54) RUBBER COMPOSITION FOR TIRES AND PNEUMATIC TIRE

KAUTSCHUKZUSAMMENSETZUNG FÜR REIFEN UND LUFTREIFEN

COMPOSITION DE CAOUTCHOUC POUR PNEUS ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2018 JP 2018102588**

(43) Date of publication of application:
**04.12.2019 Bulletin 2019/49**

(73) Proprietor: **Sumitomo Rubber Industries, Ltd.**
**Kobe-shi, Hyogo-ken 651-0072 (JP)**

(72) Inventors:
- **YOSHIOKA, Mikako**
**Kobe-shi, Hyogo 651-0072 (JP)**
- **SAWAKI, Haruko**
**Kobe-shi, Hyogo 651-0072 (JP)**
- **MABUCHI, Takahiro**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**WO-A1-2011/078859 WO-A1-2018/189496**

- **DATABASE WPI Week 201336 Thomson Scientific, London, GB; AN 2013-H18543 XP002794241, -& JP 2013 091757 A (SUMITOMO RUBBER IND LTD) 16 May 2013 (2013-05-16)**
- **DATABASE WPI Week 201334 Thomson Scientific, London, GB; AN 2013-H18546 XP002794242, -& JP 2013 091755 A (SUMITOMO RUBBER IND LTD) 16 May 2013 (2013-05-16)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 575 330 B1

Printed by Jouve, 75001 PARIS (FR)

## Description

### TECHNICAL FIELD

The present invention relates to a rubber composition for tires and a pneumatic tire including the rubber composition.

### BACKGROUND ART

With the recent increase in concern about environmental issues, the demand for fuel efficient automobiles has been increasing. There is also a need for rubber compositions for automotive tires having excellent fuel economy.

For example, it is known to reduce the amount of reinforcing fillers in order to improve fuel economy. However, this method tends to cause rubber compositions to have reduced heat build-up and reinforcement, thereby resulting in deterioration in properties such as grip performance, handling stability, and abrasion resistance. Thus, these properties are usually in a trade-off relationship with fuel economy, and it is difficult to obtain well-balanced properties.

WO 2018 / 189496 A1 is prior art under Art. 54 (3) EPC and discloses rubber compositions comprising either SBR and a terpene rubber, or BR and a terpene rubber.

WO 2011 / 078859 A1 refers to a rubber composition for aircraft tire treads and discloses a rubber composition comprising NR, BR and polyterpene resin.

JP 2013 091757 A and JP 2013 091755 A disclose a rubber composition comprising E-SBR, liquid SBR and a terpene resin.

### SUMMARY OF INVENTION

### TECHNICAL PROBLEM

The present invention aims to solve the problem and provide a rubber composition for tires that provides a balanced improvement of grip performance, fuel economy, and abrasion resistance.

### SOLUTION TO PROBLEM

The present invention relates to a rubber composition for tires, containing a rubber component and a terpene-based resin, the rubber component including, based on 100% by mass thereof, 5 to 99% by mass of styrene butadiene rubber and 1 to 80% by mass of polybutadiene rubber, with a combined amount of the styrene butadiene rubber and the polybutadiene rubber of 80% by mass or more, the terpene-based resin having a softening point of 70 to 150°C, an $\alpha$-pinene unit content of 65 to 100% by mass, a $\beta$-pinene unit content of 0 to 35% by mass, and a limonene unit content of 10% by mass or lower, the rubber composition containing, per 100 parts by mass of the rubber component, 0 to 500 parts by mass of silica and 0.1 to 100 parts by mass of the terpene-based resin.

Preferably, the terpene-based resin is at least one selected from the group consisting of $\alpha$-pinene homopolymers, terpene-based resins having an $\alpha$-pinene unit content of 99% by mass or higher, and copolymers containing an $\alpha$-pinene unit and a $\beta$-pinene unit.

Preferably, the styrene butadiene rubber is a solution-polymerized styrene butadiene rubber that has been modified with a polar group interactive with silica.

Preferably, the rubber composition contains the silica in an amount of 50 parts by mass or more per 100 parts by mass of the rubber component.

Preferably, the rubber composition contains the silica in an amount of 100 to 500 parts by mass per 100 parts by mass of the rubber component.

Preferably, the silica has a nitrogen adsorption specific surface area of 200 $m^2/g$ or more.

Preferably, the rubber composition contains carbon black in an amount of 0.1 to 200 parts by mass per 100 parts by mass of the rubber component.

Preferably, the styrene butadiene rubber has 28% by mass or less of a component derived from a butadiene monomer and having a vinyl configuration based on 100% by mass of components derived from a butadiene monomer.

Preferably, the rubber component includes, based on 100% by mass thereof, 10% by mass or less of an isoprene-based rubber.

Preferably, the rubber composition contains a mercapto silane coupling agent.

Preferably, the rubber composition contains a polar plasticizer in an amount of 0.1 to 100 parts by mass per 100 parts by mass of the rubber component.

Preferably, the polar plasticizer has a glass transition temperature of -80°C or lower.

Preferably, the rubber composition is for use in cap treads.

Another aspect of the present invention relates to a pneumatic tire, including a cap tread and a base tread, the cap tread including the rubber composition.

ADVANTAGEOUS EFFECTS OF INVENTION

The rubber composition for tires of the present invention has predetermined contents of a specific rubber component and a specific terpene-based resin. Such a rubber composition provides a balanced improvement of grip performance, fuel economy, and abrasion resistance.

DESCRIPTION OF EMBODIMENTS

The rubber composition has predetermined contents of a rubber component having predetermined styrene butadiene rubber and polybutadiene rubber contents, and a terpene-based resin having a softening point of 70 to 150°C, an α-pinene unit content of 65 to 100% by mass, a β-pinene unit content of 0 to 35% by mass, and a limonene unit content of 10% by mass or lower. The combined use of the rubber component having predetermined styrene butadiene rubber and polybutadiene rubber contents with the specific terpene-based resin provides a significant improvement in the balance of grip performance (e.g. wet grip performance, high-speed grip performance), fuel economy, and abrasion resistance, and further in grip performance (e.g. wet grip performance, high-speed grip performance).

The reason for this effect is not clear, but it is believed that it may be due to the following mechanism.

Conventional rubber systems containing styrene butadiene rubber (SBR) may involve the use of resin components such as styrene-based resins, aromatic modified terpene resins, or terpene phenol resins to provide affinity for SBR. In this context, the present inventors have surprisingly found that the use of a specific terpene-based resin enables a balanced improvement of grip performance (e.g. wet grip performance, high-speed grip performance), fuel economy, and abrasion resistance.

The mechanism for these improvements in properties is not completely clear, but it is believed that since the terpene-based resin is formed primarily from α-pinene, it has a more uniform steric structure which improves grip performance and handling stability, and it can also co-cure with polymer components, thereby improving abrasion resistance. Further, it is believed that since the terpene-based resin tends to have a Tg that is high for its molecular weight due to the predetermined softening point and α-pinene, β-pinene, and limonene unit contents, adding even a small amount of resin can improve grip performance, and therefore the balance of grip performance, fuel economy, and abrasion resistance can be significantly improved.

(Rubber component)

The rubber composition contains a rubber component which includes styrene butadiene rubber (SBR) and polybutadiene rubber (BR).

The amount of the SBR based on 100% by mass of the rubber component is 5% by mass or more, preferably 10% by mass or more, more preferably 25% by mass or more. The upper limit of the amount is 99% by mass or less, more preferably 97% by mass or less. When the amount is within the range indicated above, a good balance of grip performance, fuel economy, and abrasion resistance tends to be achieved.

In the SBR, the amount of a component derived from a butadiene monomer and having a vinyl configuration (vinyl-butadiene unit) based on 100% by mass of components derived from a butadiene monomer is preferably 28% by mass or less, more preferably 27% by mass or less, still more preferably 25% by mass or less. When the amount is adjusted to be not more than the upper limit, crosslinking reactions and reactions with silane coupling agents tend to be promoted to achieve a balanced improvement of grip performance, fuel economy, and abrasion resistance. The lower limit of the amount is preferably 0.1% by mass or more, more preferably 0.2% by mass or more, still more preferably 0.5% by mass or more. When the amount is adjusted to be not less than the lower limit, the SBR tends to have better affinity and compatibility with other rubber component species, thereby resulting in improved properties.

In the SBR, the amount of a component derived from a butadiene monomer and having a cis configuration (cis-butadiene unit) based on 100% by mass of components derived from a butadiene monomer is preferably 20% by mass or more but is preferably 90% by mass or less. When the amount is within the range indicated above, a better balance of rubber elasticity, abrasion resistance, and fracture resistance tends to be achieved, and thus the balance of grip performance, fuel economy, and abrasion resistance also tends to be improved.

The SBR preferably has a styrene content (amount of styrene units based on 100% by mass of the SBR) of 1% by mass or more, more preferably 3% by mass or more, still more preferably 5% by mass or more. The styrene content is also preferably 50% by mass or less, more preferably 45% by mass or less, still more preferably 40% by mass or less. When the styrene content is within the range indicated above, a balanced improvement of wet grip performance

and fuel economy tends to be achieved. Furthermore, the SBR tends to have better affinity and compatibility with other rubber component species, thereby resulting in improved properties.

In view of abrasion resistance and mechanical strength, the SBR preferably has a weight average molecular weight (Mw) of 500, 000 or more, more preferably 600, 000 or more. Further, a Mw of 700, 000 or more, 800, 000 or more, 900, 000 or more, or 1,000,000 or more is suitable in that order. The upper limit of the Mw is not particularly critical, but is preferably 3,000,000 or less in view of processability.

In view of the balance between processability and grip performance (wet grip performance) and the balance of grip performance, fuel economy, and abrasion resistance, the SBR is preferably a solution-polymerized SBR (S-SBR).

Preferably, the SBR has been modified with a polar group interactive with silica. For example, it may suitably be a modified SBR in which the chain end and/or backbone is modified with the polar group. Non-limiting examples of the polar group (modifying group) include alkoxysilyl, amino, hydroxy, carboxyl, and epoxy groups. These may be used alone or in combinations of two or more. Preferred among these are alkoxysilyl groups.

The modified SBR may suitably be, for example, a modified SBR which has been modified with a compound (modifier) represented by the following formula:

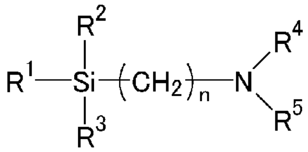

wherein $R^1$, $R^2$, and $R^3$ are the same or different and each represent an alkyl, alkoxy, silyloxy, acetal, carboxyl (-COOH), or mercapto (-SH) group, or a derivative thereof; $R^4$ and $R^5$ are the same or different and each represent a hydrogen atom or an alkyl group, and $R^4$ and $R^5$ may be joined together to form a ring structure with the nitrogen atom; and n represents an integer.

The SBR modified with the compound (modifier) of the above formula may suitably be, for example, a SBR obtained by modifying the polymerizing end (active terminal) of a solution-polymerized styrene butadiene rubber with the compound of the above formula, among others.

$R^1$, $R^2$, and $R^3$ are each suitably an alkoxy group, preferably a C1-C8, more preferably C1-C4 alkoxy group; $R^4$ and $R^5$ are each suitably an alkyl group, preferably a C1-C3 alkyl group; and n is preferably 1 to 5, more preferably 2 to 4, still more preferably 3. When $R^4$ and $R^5$ are joined together to form a ring structure with the nitrogen atom, the ring structure is preferably a 4- to 8-membered ring. The term "alkoxy group" encompasses cycloalkoxy (e.g. cyclohexyloxy) and aryloxy (e.g. phenoxy, benzyloxy) groups.

The SBR may contain a block of isoprene-derived components (isoprene block) in the molecular chain. The isoprene block is preferably a block of cis-isoprene-derived components (cis-isoprene block).

The rubber composition contains BR. The amount of the BR based on 100% by mass of the rubber component is 1% by mass or more, more preferably 5% by mass or more. The upper limit of the amount is 80% by mass or less, preferably 60% by mass or less, still more preferably 50% by mass or less. When the amount is within the range indicated above, a good balance of grip performance, fuel economy, and abrasion resistance tends to be achieved.

Any BR may be used, including, for example, those commonly used in the tire industry such as high-cis BR, BR containing 1,2-syndiotactic polybutadiene crystals (SPB-containing BR), polybutadiene rubber synthesized using rare earth catalysts (rare earth-catalyzed BR), and polybutadiene rubber modified with tin compounds (tin-modified BR). For example, commercial products available from Ube Industries, Ltd., JSR Corporation, Asahi Kasei Corporation, and Zeon Corporation may be used as the BR. These may be used alone or in combinations of two or more.

In view of abrasion resistance and other properties, the BR preferably has a cis content of 90% by mass or higher, more preferably 95% by mass or higher.

Herein, the cis content (cis-1,4 linkage content) is calculated from signal intensities measured by infrared absorption spectrometry or NMR analysis.

In view of the balance of grip performance, fuel economy, and abrasion resistance, the combined amount of the SBR and BR based on 100% by mass of the rubber component in the rubber composition is 80% by mass or more, preferably 90% by mass or more, more preferably 92% by mass or more, and may be 100% by mass.

The rubber composition may contain an isoprene-based rubber, but in view of the balance of grip performance, fuel economy, and abrasion resistance, the amount of the isoprene-based rubber based on 100% by mass of the rubber component is preferably 10% by mass or less, more preferably 8% by mass or less.

Examples of the isoprene-based rubber include natural rubber (NR), polyisoprene rubber (IR), refined NR, modified NR, and modified IR. The NR and IR may be those commonly used in the tire industry. Examples of the NR include SIR20, RSS#3, and TSR20, while examples of the IR include IR2200. Examples of the refined NR include deproteinized natural rubber (DPNR) and highly purified natural rubber (UPNR). Examples of the modified NR include

epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These isoprene-based rubbers may be used alone or in combinations of two or more.

The rubber component of the rubber composition may include other rubber component species as long as the effect is not impaired. Examples of other rubber component species include diene rubbers such as acrylonitrile butadiene rubber (NBR), chloroprene rubber (CR), butyl rubber (IIR), and styrene-isoprene-butadiene copolymer rubber (SIBR).

(Silica)

In the rubber composition, the amount of silica per 100 parts by mass of the rubber component is preferably 50 parts by mass or more, more preferably 90 parts by mass or more, still more preferably 100 parts by mass or more, particularly preferably 120 parts by mass or more. The amount is 500 parts by mass or less, preferably 250 parts by mass or less, more preferably 200 parts by mass or less. When the amount is within the range indicated above, a good balance of grip performance, fuel economy, and abrasion resistance tends to be achieved.

The silica preferably has a nitrogen adsorption specific surface area ($N_2SA$) of 150 $m^2/g$ or more, more preferably 180 $m^2/g$ or more, still more preferably 200 $m^2/g$ or more, particularly preferably 210 $m^2/g$ or more. A $N_2SA$ not less than the lower limit tends to lead to a high reinforcing effect, resulting in excellent abrasion resistance and other properties. The $N_2SA$ is also preferably 600 $m^2/g$ or less, more preferably 300 $m^2/g$ or less. The silica having a $N_2SA$ not more than the upper limit tends to readily disperse, thereby resulting in good fuel economy and good processability.

The $N_2SA$ of the silica is measured by the BET method in accordance with ASTM D3037-93.

Non-limiting examples of the silica include dry silica (anhydrous silica) and wet silica (hydrous silica) . Wet silica is preferred because it has a large number of silanol groups. These types of silica may be used alone or in combinations of two or more.

(Silane coupling agent)

The rubber composition preferably contains a silane coupling agent.

The amount of the silane coupling agent per 100 parts by mass of the silica is preferably 0.5 parts by mass or more, more preferably 1 part by mass or more, still more preferably 3 parts by mass or more. When the amount is 0.5 parts by mass or more, the silane coupling agent tends to provide a sufficient coupling effect and also highly disperse the silica. The amount is also preferably 15 parts by mass or less, more preferably 12 parts by mass or less, still more preferably 10 parts by mass or less. When the amount is 15 parts by mass or less, no excess silane coupling agent tends to remain, thus resulting in the rubber composition having improved processability and other properties.

The silane coupling agent may be any silane coupling agent conventionally used in combination with silica in the rubber industry. Examples include sulfide silane coupling agents such as bis(3-triethoxysilylpropyl)tetrasulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. In view of the effect of improving the properties, mercapto silane coupling agents (e.g. silane coupling agents having a mercapto group, silane coupling agents having a protected mercapto group) are preferred among these.

The mercapto silane coupling agent may suitably be a silane coupling agent represented by the formula (2-1) below and/or a silane coupling agent containing linking units A and B represented by the formulas (2-2) and (2-3), respectively, below.

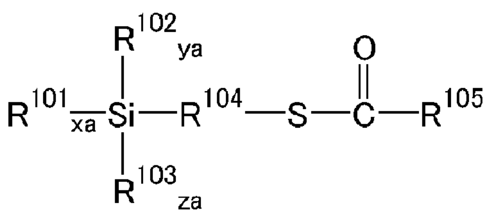

(2-1)

In formula (2-1), $R^{101}$ represents a monovalent group selected from -Cl, -Br, -$OR^{106}$, -O(O=) $CR^{106}$, -ON=$CR^{106}R^{107}$, -ON=$CR^{106}R^{107}$, -$NR^{106}R^{107}$, or -$(OSiR^{106}R^{107})_h(OSiR^{106}R^{107}R^{108})$ where $R^{106}$, $R^{107}$, and $R^{108}$ may be the same or different and each represent a hydrogen atom or a C1-C18 monovalent hydrocarbon group, and h represents an average number of 1 to 4; $R^{102}$ represents $R^{101}$, a hydrogen atom, or a C1-C18 monovalent hydrocarbon group; $R^{103}$ represents the group: -$[O(R^{109}O)_j]$- where $R^{109}$ represents a C1-C18 alkylene group, and j represents an

integer of 1 to 4; $R^{104}$ represents a C1-C18 divalent hydrocarbon group; $R^{105}$ represents a C1-C18 monovalent hydrocarbon group; and xa, ya, and za are numbers satisfying the following relationships: xa + ya + 2za = 3, $0 \le xa \le 3$, $0 \le ya \le 2$, and $0 \le za \le 1$.

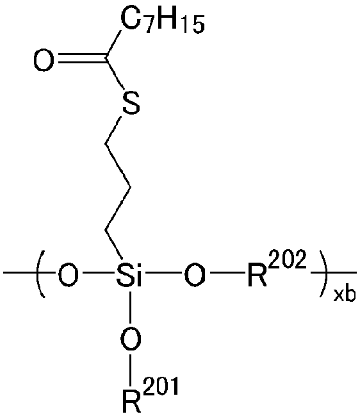

(2-2)

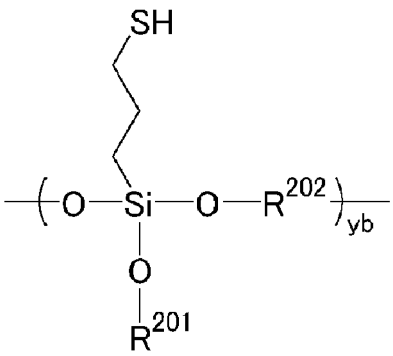

(2-3)

In formulas (2-2) and (2-3), xb represents an integer of 0 or more; yb represents an integer of 1 or more; $R^{201}$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxyl group or a carboxyl group; $R^{202}$ represents a branched or unbranched C1-C30 alkylene group, a branched or unbranched C2-C30 alkenylene group, or a branched or unbranched C2-C30 alkynylene group, provided that $R^{201}$ and $R^{202}$ may together form a cyclic structure.

Specific examples of $R^{102}$, $R^{105}$, $R^{106}$, $R^{107}$, and $R^{108}$ in formula (2-1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of $R^{109}$ in formula (2-1) include linear alkylene groups such as a methylene group, an ethylene group, an n-propylene group, an n-butylene group, and a hexylene group; and branched alkylene groups such as an isopropylene group, an isobutylene group, and a 2-methylpropylene group.

Specific examples of the silane coupling agent of formula (2-1) include 3-hexanoylthiopropyltriethoxysilane, 3-octanoylthiopropyltriethoxysilane,
3-decanoylthiopropyltriethoxysilane,
3-lauroylthiopropyltriethoxysilane,
2-hexanoylthioethyltriethoxysilane,
2-octanoylthioethyltriethoxysilane,
2-decanoylthioethyltriethoxysilane,
2-lauroylthioethyltriethoxysilane,
3-hexanoylthiopropyltrimethoxysilane,
3-octanoylthiopropyltrimethoxysilane,
3-decanoylthiopropyltrimethoxysilane,

3-lauroylthiopropyltrimethoxysilane,
2-hexanoylthioethyltrimethoxysilane,
2-octanoylthioethyltrimethoxysilane,
2-decanoylthioethyltrimethoxysilane, and
2-lauroylthioethyltrimethoxysilane. Among these, 3-octanoylthiopropyltriethoxysilane (NXT available from Momentive) is particularly preferred. These silane coupling agents may be used alone or in combinations of two or more.

When the silane coupling agent containing a linking unit A of formula (2-2) and a linking unit B of formula (2-3) is used, the increase in viscosity during processing is reduced as compared to when using polysulfidesilanes such as bis(3-triethoxysilylpropyl)tetrasulfide. This is probably because, since the sulfide moiety of the linking unit A is a C-S-C bond, the silane coupling agent is thermally more stable than tetrasulfides and disulfides and thus shows less increase in Mooney viscosity.

Moreover, the decrease in scorch time is reduced as compared to when using mercaptosilanes such as 3-mercaptopropyltrimethoxysilane. This is probably because, though the linking unit B has a mercaptosilane structure, the $-C_7H_{15}$ moiety of the linking unit A covers the -SH group of the linking unit B to inhibit it from reacting with polymers, and therefore scorching is less likely to occur.

The linking unit A content of the silane coupling agent of the above structure is preferably 30 mol% or more, more preferably 50 mol% or more, but is preferably 99 mol% or less, more preferably 90 mol% or less. Moreover, in view of reactivity with silica, the linking unit B content is preferably 1 mol% or more, more preferably 5 mol% or more, still more preferably 10 mol% or more, but is preferably 70 mol% or less, more preferably 65 mol% or less, still more preferably 55 mol% or less. Moreover, the combined content of the linking units A and B is preferably 95 mol% or more, more preferably 98 mol% or more, particularly preferably 100 mol%.

The linking unit A or B content refers to the amount including the linking unit A or B present at the end of the silane coupling agent, if any. When the linking unit A or B is present at the end of the silane coupling agent, its form is not particularly limited as long as it forms a unit corresponding to formula (2-2) representing the linking unit A or formula (2-3) representing the linking unit B.

Examples of the halogen atom for $R^{201}$ include chlorine, bromine, and fluorine.

Examples of the branched or unbranched C1-C30 alkyl group for $R^{201}$ include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group. The alkyl group preferably has 1 to 12 carbon atoms.

Examples of the branched or unbranched C2-C30 alkenyl group for $R^{201}$ include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, and a 1-octenyl group. The alkenyl group preferably has 2 to 12 carbon atoms.

Examples of the branched or unbranched C2-C30 alkynyl group for $R^{201}$ include an ethynyl group, a propynyl group, a butynyl group, a pentynyl group, a hexynyl group, a heptynyl group, an octynyl group, a nonynyl group, a decynyl group, an undecynyl group, and a dodecynyl group. The alkynyl group preferably has 2 to 12 carbon atoms.

Examples of the branched or unbranched C1-C30 alkylene group for $R^{202}$ include an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group. The alkylene group preferably has 1 to 12 carbon atoms.

Examples of the branched or unbranched C2-C30 alkenylene group for $R^{202}$ include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group. The alkenylene group preferably has 2 to 12 carbon atoms.

Examples of the branched or unbranched C2-C30 alkynylene group for $R^{202}$ include an ethynylene group, a propynylene group, a butynylene group, a pentynylene group, a hexynylene group, a heptynylene group, an octynylene group, a nonynylene group, a decynylene group, an undecynylene group, and a dodecynylene group. The alkynylene group preferably has 2 to 12 carbon atoms.

In the silane coupling agent containing a linking unit A of formula (2-2) and a linking unit B of formula (2-3), the total number of repetitions (xb + yb) consisting of the sum of the number of repetitions (xb) of the linking unit A and the number of repetitions (yb) of the linking unit B is preferably in the range of 3 to 300. When the total number of repetitions is within the above-mentioned range, the $-C_7H_{15}$ moiety of the linking unit A covers the mercaptosilane of the linking unit B to reduce the decrease in scorch time while ensuring good reactivity with silica and the rubber component.

Examples of the silane coupling agent containing a linking unit A of formula (2-2) and a linking unit B of formula (2-3) include NXT-Z30, NXT-Z45, and NXT-Z60 all available from Momentive. These may be used alone or in combinations of two or more.

The mercapto silane coupling agent may also suitably be a compound represented by the following formula

(Si363 available from Evonik):

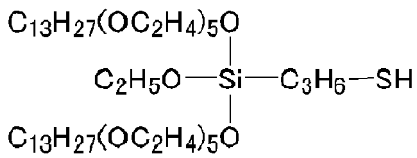

(Carbon black)

The rubber composition preferably contains carbon black. The amount of the carbon black per 100 parts by mass of the rubber component is preferably 0.1 parts by mass or more, more preferably 1 part by mass or more, still more preferably 3 parts by mass or more. When the amount is not less than the lower limit, the carbon black tends to provide sufficient reinforcement. The amount is also preferably 200 parts by mass or less, more preferably 100 parts by mass or less, still more preferably 15 parts by mass or less, particularly preferably 10 parts by mass or less. When the amount is not more than the upper limit, good fuel economy tends to be obtained.

The carbon black preferably has a nitrogen adsorption specific surface area ($N_2SA$) of 5 $m^2/g$ or more, more preferably 50 $m^2/g$ or more. The carbon black having a $N_2SA$ of 5 $m^2/g$ or more tends to provide better reinforcement, thereby resulting in sufficient abrasion resistance. The $N_2SA$ is also preferably 600 $m^2/g$ or less, more preferably 300 $m^2/g$ or less, still more preferably 150 $m^2/g$ or less. The carbon black having a $N_2SA$ of 600 $m^2/g$ or less tends to disperse better so that the above-described effect can be well achieved.

The nitrogen adsorption specific surface area of the carbon black is determined in accordance with JIS K 6217-2:2001.

Examples of the carbon black include furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite . These may be used alone or in combinations of two or more. For example, commercial products available from Asahi Carbon Co., Ltd., Cabot Japan K.K., Tokai Carbon Co., Ltd., Mitsubishi Chemical Corporation, Lion Corporation, NSCC Carbon Co., Ltd., and Columbia Carbon may be used.

(Terpene-based resin)

In view of the balance of grip performance, fuel economy, and abrasion resistance, the rubber composition contains a terpene-based resin having predetermined softening point and $\alpha$-pinene, $\beta$-pinene, and limonene unit contents.

The amount of the terpene-based resin per 100 parts by mass of the rubber component is 0.1 parts by mass or more, preferably 10 parts by mass or more, more preferably 15 parts by mass or more, still more preferably 20 parts by mass or more. Also, the amount is 100 parts by mass or less, preferably 70 parts by mass or less, more preferably 50 parts by mass or less, still more preferably 40 parts by mass or less. When the amount is within the range indicated above, a good balance of grip performance, fuel economy, and abrasion resistance tends to be achieved.

The terpene-based resin has a softening point of 70 to 150°C. The lower limit of the softening point is preferably 100°C or higher, more preferably 110°C or higher, while the upper limit is preferably 140°C or lower, more preferably 135°C or lower. The terpene-based resin having a softening point not lower than the lower limit tends to provide good abrasion resistance. The terpene-based resin having a softening point not higher than the upper limit tends to provide good processability.

The softening point is measured in accordance with ASTM D6090 (published in 1997).

The terpene-based resin preferably has a number average molecular weight (Mn) of 500 to 775. The lower limit of the Mn is more preferably 580 or more, still more preferably 620 or more, while the upper limit is more preferably 765 or less, still more preferably 755 or less. When the Mn is within the range indicated above, a good balance of grip performance, fuel economy, and abrasion resistance tends to be achieved.

The terpene-based resin preferably has a z-average molecular weight (Mz) of 1300 to 1600. The lower limit of the Mz is more preferably 1310 or more, still more preferably 1320 or more, while the upper limit is more preferably 1570 or less, still more preferably 1550 or less. When the Mz is within the range indicated above, a good balance of grip performance, fuel economy, and abrasion resistance tends to be achieved.

The terpene-based resin preferably has a weight average molecular weight (Mw) of 800 to 1100. When the Mw is within the range indicated above, a good balance of grip performance, fuel economy, and abrasion resistance tends to be achieved.

The terpene-based resin preferably has a molecular weight distribution (Mw/Mn) of 1.30 to 1.70. When the Mw/Mn is within the range indicated above, a good balance of grip performance, fuel economy, and abrasion resistance

tends to be achieved.

The Mn, Mw, and Mz are measured by gel permeation/size exclusion chromatography (GPC-SEC) as set forth in ASTM D5296 (published in 2005).

The terpene-based resin preferably has a glass transition temperature (Tg) of 25 to 90°C. The lower limit of the Tg is more preferably 35°C or higher, still more preferably 38°C or higher, while the upper limit is more preferably 85°C or lower, still more preferably 81°C or lower. When the Tg is within the range indicated above, a good balance of grip performance, fuel economy, and abrasion resistance tends to be achieved.

The Tg is measured using a differential scanning calorimeter (SC Q2000 available from TA Instruments) in accordance with ASTM D6604 (published in 2013).

The terpene-based resin has a limonene unit content (amount of limonene units based on 100% by mass of the terpene-based resin) of 10% by mass or lower, preferably 5% by mass or lower, more preferably 1% by mass or lower, still more preferably 0% by mass.

The terpene-based resin may be a homopolymer of a single terpene (terpene monomer), a copolymer of two or more terpenes, or a copolymer of at least one terpene and at least one additional monomer other than terpenes.

The terpene used for forming the terpene-based resin has a basic molecular formula represented by $(C_5H_8)_n$ wherein n represents the number of linked isoprene units and is 2 or more. Suitable examples of the terpene include α-pinene, β-pinene, δ-3-carene, and β-phellandrene; pyrolysates of α-pinene, β-pinene, δ-3-carene, δ-2-carene, and terpinene; and combinations thereof. Among these, α-pinene or β-pinene is preferred, with α-pinene being more preferred.

In view of the balance between snow and ice performance and abrasion resistance, the terpene-based resin preferably has a terpene unit content (amount of terpene units based on 100% by mass of the terpene-based resin) of 80% by mass or more, more preferably 90% by mass or more, still more preferably 95% by mass or more, particularly preferably 99% by mass or more. Such a terpene-based resin may be a homopolymer or copolymer having only terpene structural units.

The terpene-based resin may suitably be a polymer containing an α-pinene unit or a polymer containing an α-pinene unit and a β-pinene unit. More specifically, it may be, for example, an α-pinene homopolymer, a terpene-based resin having an α-pinene unit content of 99% by mass or higher, or a copolymer containing an α-pinene unit and a β-pinene unit.

In view of the balance of grip performance, fuel economy, and abrasion resistance, the terpene-based resin has an α-pinene unit content (amount of α-pinene units based on 100% by mass of the terpene-based resin) of 65 to 100% by mass. The α-pinene unit content is preferably 70% by mass or higher, more preferably 80% by mass or higher, still more preferably 90% by mass or higher, and may be 100% by mass.

In view of the balance of grip performance, fuel economy, and abrasion resistance, the terpene-based resin has a β-pinene unit content (amount of β-pinene units based on 100% by mass of the terpene-based resin) of 0 to 35% by mass. The β-pinene unit content is preferably 30% by mass or lower, more preferably 20% by mass or lower, still more preferably 15% by mass or lower, particularly preferably 10% by mass or lower, and may be 0% by mass.

In view of the balance of grip performance, fuel economy, and abrasion resistance, the terpene-based resin preferably has a combined content of α- and β-pinene units (combined amount of α- and β-pinene units based on 100% by mass of the terpene-based resin) of 80% by mass or higher, more preferably 90% by mass or higher, still more preferably 95% by mass or higher, particularly preferably 99% by mass or higher.

The terpene-based resin may be synthesized, for example, by cationic polymerization of one or two or more terpene monomers using a Lewis acid catalyst. Non-limiting examples of the Lewis acid catalyst include metal halides such as $BF_3$, $BBr_3$, $AlF_3$, $AlBr_3$, $TiCl_4$, $TiBr_4$, $TiL_4$, $FeCl_3$, $FeCl_2$, $SnCl_4$, $WCl_6$, $MoCl_5$, $ZrCl_4$, $SbCl_3$, $SbCl_5$, $TeCl_2$, and $ZnCl_2$; metal alkyl compounds such as $Et_3Al$, $Et_2AlCl_3$, $EtAlCl_2$, $Et_3Al_2Cl_3$, $(i\text{-}Bu)_3Al$, $(i\text{-}Bu)_2AlCl$, $(i\text{-}Bu)AlCl_2$, $Me_4Sn$, $Et_4Sn$, $Bu_4Sn$, and $Bu_3SnCl$; and metal alkoxy compounds such as $Al(OR)_{3-x}Cl_x$ and $Ti(OR)_{4-y}Cl_y$ wherein R represents an alkyl group or an aryl group, x represents an integer of 1 or 2, and y represents an integer of 1 to 3. The examples also include:

(i) combinations of $AlCl_3$ and alkyl tertiary amines such as trimethylamine, (ii) combinations of $AlCl_3$ and organosilicon compounds such as trialkyl silicon halides, lower dialkyl phenyl silicon halides, or hexaalkyldisiloxanes, (iii) combinations of $AlCl_3$ and organogermanium halides such as trimethylgermanium chloride or triethylgermanium ethoxide, and (iv) C1-C18 lower alkyl groups.

When the cationic polymerization is performed by solution polymerization, the solvent to be used may be any solvent that allows polymerization of terpene monomers. Examples include halogenated hydrocarbons, aromatic hydrocarbons, and aliphatic hydrocarbons. Specific examples include halogenated hydrocarbon solvents (e.g. methylene chloride, chloroform, 1,1-dichloromethane, 1,2-dichloroethane, n-propyl chloride, 1-chloro-n-butane, and 2-chloro-n-butane); aromatic hydrocarbon solvents (e.g. benzene, toluene, xylene, anisole, and naphtha) ; and aliphatic hydrocarbon solvents (e.g. pentane, hexane, heptane, octane, cyclopentane, cyclohexane, methylcyclohexane, and ethylcyclohexane). The polymerization reaction may be carried out, for example, at a temperature of -120 to 100°C, -80 to 80°C, or 5 to 50°C.

(Liquid plasticizer)

In view of processability and the balance of grip performance, fuel economy, and abrasion resistance, the rubber composition preferably contains a liquid plasticizer. The term "liquid plasticizer" refers to a plasticizer that is liquid at room temperature (25°C).

The amount of the liquid plasticizer per 100 parts by mass of the rubber component is preferably 0.1 parts by mass or more, more preferably 15 parts by mass or more, still more preferably 20 parts by mass or more. The amount is also preferably 100 parts by mass or less, more preferably 60 parts by mass or less, still more preferably 40 parts by mass or less. When the amount is within the range indicated above, a good balance of grip performance, fuel economy, and abrasion resistance tends to be achieved. The same suitably applies to the amount of the (liquid) polar plasticizer described later.

The liquid plasticizer preferably has a glass transition temperature (Tg) of -60°C or lower, more preferably -80°C or lower, still more preferably -90°C or lower. The lower limit of the Tg is not particularly critical, but is preferably -200°C or higher, more preferably -150°C or higher. When the Tg is within the range indicated above, a good balance of grip performance, fuel economy, and abrasion resistance tends to be achieved. The same suitably applies to the Tg of the (liquid) polar plasticizer described later.

The Tg may be measured as described above for the terpene-based resin.

Examples of the liquid plasticizer include oils, liquid diene polymers, and polar plasticizers (e.g. ester plasticizers) . In view of the balance of grip performance, fuel economy, and abrasion resistance, polar plasticizers such as ester plasticizers (e.g. fatty acid ester plasticizers, phosphoric acid ester plasticizers (phosphate plasticizers)) are preferred among these. These liquid plasticizers may be used alone or in combinations of two or more.

Examples of the oils include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. For example, commercial products available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., and The Nisshin OilliO Group, Ltd. may be used.

Examples of the liquid diene polymers include diene polymers which are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers. The chain end or backbone of these polymers may be modified with polar groups.

Examples of the ester plasticizers include the above-mentioned plant oils; glycerol fatty acid monoesters, glycerol fatty acid diesters, glycerol fatty acid triesters, and other synthetic products and processed plant oils; and phosphoric acid esters (e.g. phosphates and mixtures thereof).

The ester plasticizer may suitably be, for example, a fatty acid ester represented by the following formula:

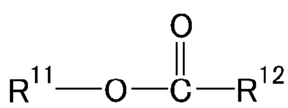

wherein $R^{11}$ represents a C1-C8 linear or branched alkyl group, a C1-C8 linear or branched alkenyl group, or a C2-C6 linear or branched alkyl group substituted with 1 to 5 hydroxyl groups, and $R^{12}$ represents a C11-C21 alkyl or alkenyl group.

Examples of $R^{11}$ include methyl, ethyl, 2-ethylhexyl, isopropyl, and octyl groups, and any of the foregoing groups substituted with 1 to 5 hydroxyl groups . Examples of $R^{12}$ include linear or branched alkyl and alkenyl groups such as lauryl, myristyl, palmityl, stearyl, and oleyl groups.

Examples of the fatty acid esters include alkyl oleates, alkyl stearates, alkyl linoleates, and alkyl palmitates. Preferred among these are alkyl oleates such as methyl oleate, ethyl oleate, 2-ethylhexyl oleate, isopropyl oleate, and octyl oleate. The amount of alkyl oleates, if used, based on 100% by mass of the total fatty acid esters is preferably 80% by mass or more.

Examples of the fatty acid esters also include fatty acid monoesters and diesters derived from fatty acids (e.g. oleic acid, stearic acid, linoleic acid, or palmitic acid) and alcohols (e.g. ethylene glycol, glycerol, trimethylolpropane, pentaerythritol, erythritol, xylitol, sorbitol, dulcitol, mannitol, or inositol). Preferred among these are oleic acid monoesters.

The amount of oleic acid monoesters, if used, based on 100% by mass of the combined amount of fatty acid monoesters and diesters is preferably 80% by mass or more.

The ester plasticizer may also suitably be a phosphoric acid ester.

The phosphoric acid ester is preferably a C12-C30 compound. In particular, it may suitably be a C12-C30 trialkyl phosphate. The number of carbon atoms of the trialkyl phosphate means the total number of carbon atoms of the three alkyl groups, and the three alkyl groups may be the same as or different from one another. Examples of such alkyl groups include linear or branched alkyl groups which may contain heteroatoms such as an oxygen atom or may be substituted with halogen atoms such as fluorine, chlorine, bromine, or iodine.

Examples of the phosphoric acid ester also include known phosphoric acid ester plasticizers such as mono-, di-, or tri-esters derived from phosphoric acid and C1-C12 monoalcohols or (poly)oxyalkylene adducts thereof; and compounds obtained by substituting one or two alkyl groups of the trialkyl phosphates with phenyl groups. Specific examples include tris(2-ethylhexyl) phosphate, trimethyl phosphate, triethyl phosphate, tributyl phosphate, trioctyl phosphate, triphenyl phosphate, tricresyl phosphate, trixylenyl phosphate, cresyl diphenyl phosphate, 2-ethylhexyl diphenyl phosphate, and tris(2-butoxyethyl) phosphate.

(Other materials)

The rubber composition may contain a solid resin (resin that is solid at room temperature (25°C)) other than the terpene-based resins. Examples of the solid resin include aromatic vinyl polymers, coumarone-indene resins, coumarone resins, indene resins, phenolic resins, rosin resins, petroleum resins, and acrylic resins. The combined amount of the terpene-based resin and the solid resin (additional resin) other than the terpene-based resins, if present, is preferably 0.1 to 100 parts by mass, more preferably 10 to 70 parts by mass per 100 parts by mass of the rubber component.

The rubber composition preferably contains an antioxidant.

Examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)-propionate] methane. These may be used alone or in combinations of two or more. Preferred among these are p-phenylenediamine antioxidants.

The antioxidant may be a product available from, for example, Seiko Chemical Co., Ltd., Sumitomo Chemical Co., Ltd., Ouchi Shinko Chemical Industrial Co., Ltd., or Flexsys.

The amount of the antioxidant per 100 parts by mass of the rubber component is preferably 0.5 parts by mass or more, more preferably 1 part by mass or more. The amount is also preferably 10 parts by mass or less, more preferably 5 parts by mass or less.

The rubber composition preferably contains stearic acid.

The stearic acid may be a conventional one, and examples include products available from NOF Corporation, Kao Corporation, Wako Pure Chemical Industries, Ltd., and Chiba Fatty Acid Co., Ltd.

The amount of the stearic acid per 100 parts by mass of the rubber component is preferably 0.5 parts by mass or more, more preferably 1 part by mass or more. The amount is also preferably 10 parts by mass or less, more preferably 5 parts by mass or less.

The rubber composition preferably contains a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Among these, petroleum waxes are preferred, with paraffin waxes being more preferred.

The wax may be a product of, for example, Ouchi Shinko Chemical Industrial Co., Ltd., Nippon Seiro Co., Ltd., or Seiko Chemical Co., Ltd.

The amount of the wax per 100 parts by mass of the rubber component is preferably 0.3 to 20 parts by mass, more preferably 0.5 to 10 parts by mass.

The rubber composition preferably contains zinc oxide.

The zinc oxide may be a conventional one, and examples include products available from Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the rubber component is preferably 0.5 parts by mass or more, more preferably 1 part by mass or more. The amount is also preferably 10 parts by mass or less, more preferably 5 parts by mass or less.

The rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a product available from, for example, Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the rubber component is preferably 0.5 parts by mass or more, more preferably 0.8 parts by mass or more. The amount is also preferably 3.0 parts by mass or less, more preferably 2.5 parts by mass or less.

The rubber composition preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Preferred among these are sulfenamide or guanidine vulcanization accelerators.

The amount of the vulcanization accelerator per 100 parts by mass of the rubber component is preferably 1 part by mass or more, more preferably 2 parts by mass or more. The amount is also preferably 10 parts by mass or less, more preferably 7 parts by mass or less.

In addition to the above-mentioned components, the rubber composition may contain additives commonly used in the tire industry. Examples of such additives include organic peroxides, and fillers such as calcium carbonate, talc, alumina, clay, aluminum hydroxide, and mica.

The rubber composition may be prepared, for example, by kneading the components with a rubber kneading machine such as an open roll mill or Banbury mixer, and vulcanizing the kneaded mixture.

The kneading conditions are as follows. In a base kneading step that includes kneading additives other than vulcanizing agents and vulcanization accelerators, the kneading temperature is usually 100 to 180°C, preferably 120 to 170°C. In a final kneading step that includes kneading vulcanizing agents and vulcanization accelerators, the kneading temperature is usually 120°C or lower, and preferably in the range of 85 to 110°C. The composition obtained after kneading the vulcanizing agents and vulcanization accelerators is usually vulcanized by, for example, press vulcanization. The vulcanization temperature is usually 140 to 190°C, preferably 150 to 185°C.

The rubber composition may be used in various tire components, and suitably in cap treads, especially for summer tires.

(Pneumatic tire)

The pneumatic tire of the present invention may be suitably used as a summer tire, especially for passenger vehicles, that includes a cap tread containing the rubber composition. In particular, in view of the balance of grip performance, fuel economy, and abrasion resistance, the pneumatic tire of the present invention may suitably be a pneumatic tire including a multilayer tread (e.g. a two-layer tread) that includes a cap tread containing the rubber composition and a base tread.

The pneumatic tire may be produced using the rubber composition by usual methods.

Specifically, the rubber composition, before vulcanization, may be extruded into the shape of a cap tread and then assembled with other tire components including a base tread on a tire building machine in a usual manner to build an unvulcanized tire, which may then be heated and pressurized in a vulcanizer to produce a tire.

The rubber composition used in the base tread of the pneumatic tire preferably contains SBR. Non-limiting examples of the SBR include those described above for the rubber composition suitable for cap treads.

In view of fuel economy and other properties, the amount of the SBR, if present, based on 100% by mass of the rubber component of the rubber composition is preferably 10% by mass or more, more preferably 20% by mass or more, still more preferably 30% by mass or more. In view of fuel economy and mechanical strength, the amount is also preferably 90% by mass or less, more preferably 80% by mass or less, still more preferably 70% by mass or less.

The rubber composition used in the base tread of the pneumatic tire preferably contains an isoprene-based rubber. Non-limiting examples of the isoprene-based rubber include those described above for the rubber composition suitable for cap treads.

The amount of the isoprene-based rubber, if present, based on 100% by mass of the rubber component is preferably 10% by mass or more, more preferably 15% by mass or more, while the upper limit is not particularly critical. When the amount is within the range indicated above, good mechanical strength can be obtained.

The rubber composition used in the base tread of the tire preferably contains BR. Non-limiting examples of the BR include those described above for the rubber composition suitable for cap treads.
The amount of the BR, if present, based on 100% by mass of the rubber component is preferably 10% by mass or more, more preferably 15% by mass or more, but is preferably 60% by mass or less, more preferably 40% by mass or less. When the amount is within the range indicated above, good crack growth resistance can be obtained.
In addition to the above-mentioned materials, the rubber composition used in the base tread of the pneumatic tire may appropriately contain chemicals conventionally used in rubber compositions for tires, such as carbon black, silica, waxes, stearic acid, antioxidants, zinc oxide, sulfur, and vulcanization accelerators.

EXAMPLES

The present invention will be specifically described below with reference to, but not limited to, examples.
The chemicals used in the examples and comparative examples are listed below.
SBR: modified S-SBR terminated with an alkoxysilyl group (styrene unit content: 20% by mass, vinyl-butadiene unit content based on 100% by mass of butadiene units: 10% by mass, cis-butadiene unit content based on 100% by mass of butadiene units: 60% by mass, Mw: 900,000)

BR: BR150B (cis content: 96 % by mass, vinyl content: 2% by mass) available from Ube Industries, Ltd.
NR: RSS#3
Carbon black: Diablack SA ($N_2SA$: 137 $m^2/g$) available from Mitsubishi Chemical Corporation
Silica: ZEOSIL P200MP ($N_2SA$: 215 $m^2/g$) available from Rhodia
Silane coupling agent: NXT-Z45 (a copolymer with linking units A and B, linking unit A content: 55 mol%, linking unit B content: 45 mol%) available from Momentive
Terpene-based resin 1: $\alpha$-pinene homopolymer (softening point: 130°C, Mn: 742 g/mol, Mz: 1538 g/mol, Mw: 1055 g/mol, Mw/Mn: 1.42, Tg: 81°C, limonene unit content: 0% by mass)
Terpene-based resin 2: pinene polymer ($\alpha$-pinene content: 90% by mass, $\beta$-pinene content: 10% by mass, softening point: 130°C, Mn: 657 g/mol, Mz: 1332 g/mol, Mw: 917 g/mol, Mw/Mn: 1.40, Tg: 80°C, limonene unit content: 0% by mass)
Terpene-based resin 3: pinene polymer ($\alpha$-pinene content: 20% by mass, $\beta$-pinene content: 80% by mass, softening point: 130°C, Mn: 790 g/mol, Mz: 1891 g/mol, Mw: 1101 g/mol, Mw/Mn: 1.57, Tg: 78°C, limonene unit content: 0% by mass)
Resin 4: $\alpha$-methylstyrene resin (Sylvares SA120 available from Kraton Polymers, softening point: 120°C)
Wax: Ozoace wax available from Nippon Seiro Co., Ltd.
Antioxidant: NOCRAC 6C available from Ouchi Shinko Chemical Industrial Co., Ltd.
Liquid plasticizer 1: sunflower oil (glycerol fatty acid triester, Tg: -60°C, oleic acid content: 55% by mass, iodine number: 80) available from The Nisshin OilliO Groups, Ltd.
Liquid plasticizer 2: glycerol fatty acid monoester (Pionier TP130B available from H&R, monoester of high oleic sunflower oil, Tg: -110°C)
Liquid plasticizer 3: tris(2-ethylhexyl) phosphate (phosphate plasticizer, Disflamoll TOF available from Lanxess, Tg: -105°C)
Stearic acid: "KIRI" available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS available from Ouchi Shinko Chemical Industrial Co., Ltd.

<Examples and Comparative Examples>

According to each formulation listed in Table 1, the materials other than the sulfur and vulcanization accelerator were kneaded for three minutes at 150°C using a 1.7 L Banbury mixer to give a kneaded mixture. Next, the sulfur and vulcanization accelerator were added to the kneaded mixture, followed by kneading for five minutes at 50°C using an open roll mill to give an unvulcanized rubber composition. The unvulcanized rubber composition was press-vulcanized for 12 minutes at 170°C in a 0.5 mm-thick die to give a vulcanized rubber composition.
Separately, the unvulcanized rubber compositions prepared as above were each formed into the shape of a cap tread and assembled with other tire components including a base tread, followed by vulcanization at 170°C for 15 minutes to prepare a test tire (size: 195/65R15, tread: a two-layer tread consisting of a cap tread and a base tread).
The vulcanized rubber sheets (vulcanized rubber compositions) and test tires prepared as above were evaluated as described below. Table 1 shows the results.

<Viscoelastic test: Rolling resistance>

Strip specimens having a width of 1 mm or 2 mm and a length of 40 mm were punched out of the vulcanized rubber composition sheets and then tested. The tan δ of the specimens was measured using a spectrometer (Ueshima Seisakusho Co., Ltd.) at a dynamic strain amplitude of 1%, a frequency of 10 Hz, and a temperature of 50°C. The tan δ of each formulation example is expressed as an index using the equation below. A higher index indicates a lower rolling resistance and thus better fuel economy.

$$(\text{Rolling resistance index}) = (\tan\delta \text{ of Comparative Example 1})/(\tan\delta \text{ of each formulation example}) \times 100$$

<Abrasion resistance>

Each set of test tires was mounted on a front-engine, front-wheel-drive car of 2000 cc displacement made in Japan. After running 5000 km at 100 to 150 km/h, the groove depth in the tire tread part was measured. The distance at which the tire groove depth decreased by 1 mm was calculated and expressed as an index using the equation below. A higher index indicates better abrasion resistance.

$$(\text{Abrasion resistance index}) = (\text{Distance at which tire groove depth of each formulation example decreased by 1 mm})/(\text{Distance at which tire groove depth of Comparative Example 1 decreased by 1 mm}) \times 100$$

<High-speed grip performance>

Each set of test tires was mounted on a front-engine, front-wheel-drive car of 2000 cc displacement made in Japan. The car was run under dry road conditions at 25°C at the Asahikawa Tire Proving Ground in Hokkaido, Japan. The stopping distance required for the car to stop after the brakes that lock up were applied at 160 km/h was measured. The distances are expressed as an index using the equation below, with Comparative Example 1 set equal to 100. A higher index indicates better braking performance during high speed running.

$$(\text{High-speed grip performance index}) = (\text{Stopping distance of Comparative Example 1})/(\text{Stopping distance of each formulation example}) \times 100$$

<Wet grip performance>

The tires were tested as in the evaluation of high-speed grip performance, except that the car was run under wet road conditions. The results are expressed as an index using the equation below. A higher index indicates better wet grip performance.

$$(\text{Wet grip performance index}) = (\text{Stopping distance of Comparative Example 1})/(\text{Stopping distance of each formulation example}) \times 100$$

[Table 1]

| | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| Amount (parts by mass) | SBR | 70 | 70 | 70 | 70 | 65 | 60 | 100 | 70 | 70 | 70 |
| | BR | 30 | 30 | 30 | 30 | 27 | 40 | – | 30 | 30 | 30 |
| | NR | – | – | – | – | 8 | – | – | – | – | – |
| | Carbon black | 5 | 5 | 5 | 5 | 5 | 5 | 5 | 5 | 5 | 5 |
| | Silica | 120 | 120 | 120 | 150 | 120 | 100 | 180 | 120 | 120 | 120 |
| | Silane coupling agent | 10 | 10 | 10 | 15 | 10 | 8 | 20 | 10 | 10 | 10 |
| | Terpene-based resin 1 | 30 | 30 | 30 | – | 30 | 20 | 50 | — | — | — |
| | Terpene-based resin 2 | – | – | – | 30 | – | – | – | – | – | — |
| | Terpene-based resin 3 | – | – | – | – | – | – | – | 25 | — | — |
| | Resin 4 | — | — | — | — | — | – | — | — | 25 | — |
| | Wax | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 |
| | Liquid plasticizer 1 | 20 | — | — | — | — | 20 | — | 20 | 20 | 30 |
| | Liquid plasticizer 2 | — | 20 | — | 30 | 20 | — | 80 | — | — | — |
| | Liquid plasticizer 3 | — | — | 20 | — | — | — | — | — | — | — |
| | Stearic acid | 1 | 1 | 1 | 1 | 1 | 1 | 1 | 1 | 1 | 1 |
| | Zinc oxide | 1.5 | 1.5 | 1.5 | 1.5 | 1.5 | 1.5 | 1.5 | 1.5 | 1.5 | 1.5 |
| | Sulfur | 1 | 1 | 1 | 1 | 1 | 1 | 1 | 1 | 1 | 1 |
| | Vulcanization accelerator | 2 | 2 | 2 | 2 | 2 | 2 | 2 | 2 | 2 | 2 |
| Evaluation | Wet grip performance | 110 | 104 | 103 | 120 | 113 | 105 | 138 | 100 | 100 | 95 |
| | High speed grip performance | 108 | 106 | 106 | 113 | 112 | 107 | 105 | 100 | 98 | 95 |
| | Rolling resistance | 105 | 110 | 108 | 100 | 110 | 110 | 95 | 100 | 90 | 100 |
| | Abrasion resistance | 107 | 105 | 106 | 115 | 105 | 110 | 95 | 100 | 85 | 89 |

wherein examples 1 to 6 are inventive examples and example 7 is reference example.

As shown in Table 1, the balance of grip performance (wet grip performance, high-speed grip performance), fuel economy (rolling resistance), and abrasion resistance was significantly improved in the examples in which a predetermined amount of a terpene-based resin having predetermined softening point and α-pinene, β-pinene, and limonene unit contents was added to a specific rubber component.

## Claims

1. A pneumatic tire, comprising a cap tread, the cap tread comprising a rubber composition for tires comprising a rubber component and a terpene-based resin,

   the rubber component comprising, based on 100% by mass thereof, 5 to 99% by mass of styrene butadiene rubber and 1 to 80% by mass of polybutadiene rubber, with a combined amount of the styrene butadiene rubber and the polybutadiene rubber of 80% by mass or more,
   the terpene-based resin having a softening point of 70 to 150°C, an α-pinene unit content of 65 to 100% by mass, a β-pinene unit content of 0 to 35% by mass, and a limonene unit content of 10% by mass or lower,
   the rubber composition comprising, per 100 parts by mass of the rubber component, 0 to 500 parts by mass of silica and 0.1 to 100 parts by mass of the terpene-based resin.

2. The pneumatic tire according to claim 1, wherein the terpene-based resin is at least one selected from the group consisting of α-pinene homopolymers, terpene-based resins having an α-pinene unit content of 99% by mass or higher, and copolymers containing an α-pinene unit and a β-pinene unit.

3. The pneumatic tire according to claim 1 or 2, wherein the styrene butadiene rubber is a solution-polymerized styrene butadiene rubber that has been modified with a polar group interactive with silica.

4. The pneumatic tire according to any one of claims 1 to 3, wherein the rubber composition comprises the silica in an amount of 50 parts by mass or more per 100 parts by mass of the rubber component.

5. The pneumatic tire according to any one of claims 1 to 4, wherein the rubber composition comprises the silica in an amount of 100 to 500 parts by mass per 100 parts by mass of the rubber component.

6. The pneumatic tire according to any one of claims 1 to 5, wherein the silica has a nitrogen adsorption specific surface area of 200 $m^2/g$ or more.

7. The pneumatic tire according to any one of claims 1 to 6, wherein the rubber composition comprises carbon black in an amount of 0.1 to 200 parts by mass per 100 parts by mass of the rubber component.

8. The pneumatic tire according to any one of claims 1 to 7, wherein the styrene butadiene rubber has 28% by mass or less of a component derived from a butadiene monomer and having a vinyl configuration based on 100% by mass of components derived from a butadiene monomer.

9. The pneumatic tire according to any one of claims 1 to 8, wherein the rubber component comprises, based on 100% by mass thereof, 10% by mass or less of an isoprene-based rubber.

10. The pneumatic tire according to any one of claims 1 to 9, wherein the rubber composition comprises a mercapto silane coupling agent.

11. The pneumatic tire according to any one of claims 1 to 10, wherein the rubber composition comprises a polar plasticizer in an amount of 0.1 to 100 parts by mass per 100 parts by mass of the rubber component.

12. The pneumatic tire according to claim 11, wherein the polar plasticizer has a glass transition temperature of -80°C or lower.

13. The pneumatic tire according to any one of claims 1 to 12, comprising a base tread.

**Patentansprüche**

1. Luftreifen, der eine Laufflächenkrone umfasst, wobei die Laufflächenkrone eine Kautschukzusammensetzung für Reifen umfasst, die eine Kautschukkomponente und ein Terpen-basiertes Harz umfasst,
wobei die Kautschukkomponente, bezogen auf 100 Massenprozent derselben, 5 bis 99 Massenprozent Styrol-Butadien-Kautschuk und 1 bis 80 Massenprozent Polybutadien-Kautschuk umfasst, mit einer Gesamtmenge des Styrol-Butadien-Kautschuks und des Polybutadien-Kautschuks von 80 Massenprozent oder mehr,
wobei das Terpen-basierte Harz einen Erweichungspunkt von 70 bis 150°C, einen Gehalt an α-Pinen-Einheiten von 65 bis 100 Massenprozent, einen Gehalt an β-Pinen-Einheiten von 0 bis 35 Massenprozent und einen Gehalt an Limonen-Einheiten von 10 Massenprozent oder weniger aufweist,
wobei die Kautschukzusammensetzung pro 100 Massenteile der Kautschukkomponente 0 bis 500 Massenteile Siliciumdioxid und 0,1 bis 100 Massenteile des Terpen-basierten Harzes umfasst.

2. Luftreifen nach Anspruch 1, wobei das Terpen-basierte Harz mindestens eines ist, welches ausgewählt ist aus der Gruppe bestehend aus α-Pinen-Homopolymeren, Terpen-basierten Harzen mit einem Gehalt an α-Pinen-Einheiten von 99 Massenprozent oder höher und Copolymeren, die eine α-Pinen-Einheit und eine β-Pinen-Einheit enthalten.

3. Luftreifen nach Anspruch 1 oder 2, wobei der Styrol-Butadien-Kautschuk ein lösungspolymerisierter Styrol-Butadien-Kautschuk ist, der mit einer polaren Gruppe modifiziert worden ist, die zur Wechselwirkung mit Siliciumdioxid fähig ist.

4. Luftreifen nach einem der Ansprüche 1 bis 3, wobei die Kautschukzusammensetzung das Siliciumdioxid in einer Menge von 50 Massenteilen oder mehr pro 100 Massenteile der Kautschukkomponente umfasst.

5. Luftreifen nach einem der Ansprüche 1 bis 4, wobei die Kautschukzusammensetzung das Siliciumdioxid in einer Menge von 100 bis 500 Massenteilen pro 100 Massenteile der Kautschukkomponente umfasst.

6. Luftreifen nach einem der Ansprüche 1 bis 5, wobei das Siliciumdioxid eine spezifische Stickstoffadsorptionsoberfläche von 200 $m^2/g$ oder mehr aufweist.

7. Luftreifen nach einem der Ansprüche 1 bis 6, wobei die Kautschukzusammensetzung Ruß in einer Menge von 0,1 bis 200 Massenteilen pro 100 Massenteile der Kautschukkomponente umfasst.

8. Luftreifen nach einem der Ansprüche 1 bis 7, wobei der Styrol-Butadien-Kautschuk 28 Massenprozent oder weniger einer aus einem Butadien-Monomer stammenden und eine Vinylkonfiguration aufweisenden Komponente aufweist, bezogen auf 100 Massenprozent aus einem Butadien-Monomer stammender Komponenten.

9. Luftreifen nach einem der Ansprüche 1 bis 8, wobei die Kautschukkomponente, bezogen auf 100 Massenprozent derselben, 10 Massenprozent oder weniger eines Isopren-basierten Kautschuks umfasst.

10. Luftreifen nach einem der Ansprüche 1 bis 9, wobei die Kautschukzusammensetzung ein Mercaptosilan-Kopplungsmittel umfasst.

11. Luftreifen nach einem der Ansprüche 1 bis 10, wobei die Kautschukzusammensetzung einen polaren Weichmacher in einer Menge von 0,1 bis 100 Massenteilen pro 100 Massenteile der Kautschukkomponente umfasst.

12. Luftreifen nach Anspruch 11, wobei der polare Weichmacher eine Glasübergangstemperatur von -80°C oder niedriger aufweist.

13. Luftreifen nach einem der Ansprüche 1 bis 12, der eine Laufflächenbasis umfasst.

## Revendications

1. Pneumatique comprenant une bande de roulement supérieure, la bande de roulement supérieure comprenant une composition de caoutchouc pour pneumatiques comprenant un composant de caoutchouc et une résine à base de terpène,
le composant de caoutchouc comprenant, sur la base de 100 % en masse de celui-ci, de 5 à 99 % en masse de caoutchouc butadiène styrène et de 1 à 80 % en masse de caoutchouc polybutadiène, avec une quantité combinée de caoutchouc butadiène styrène et de caoutchouc polybutadiène supérieure ou égale à 80 % en masse,
la résine à base de terpène possédant un point de ramollissement de 70 à 150° C, une teneur en unités α-pinène de 65 à 100 % en masse, une teneur en unités β-pinène de 0 à 35 % en masse, et une teneur en unités limonène inférieure ou égale à 10 % en masse,
la composition de caoutchouc comprenant, par 100 parties en masse de composant de caoutchouc, de 0 à 500

parties en masse de silice et de 0,1 à 100 parties en masse de la résine à base de terpène.

**2.** Pneumatique selon la revendication 1,
dans lequel la résine à base de terpène est au moins un constituant choisi à partir du groupe constitué des homopolymères $\alpha$-pinène, des résine à base de terpène possédant une teneur en unités $\alpha$-pinène supérieure ou égale à 99 % en masse, et de copolymères contenant une unité $\alpha$-pinène et une unité $\beta$-pinène.

**3.** Pneumatique selon la revendication 1 ou la revendication 2,
dans lequel le caoutchouc butadiène styrène est un caoutchouc butadiène styrène polymérisé en solution qui a été modifié avec un groupement polaire interagissant avec la silice.

**4.** Pneumatique selon l'une quelconque des revendications 1 à 3, dans lequel la composition de caoutchouc comprend de la silice dans une quantité supérieure ou égale à 50 % en masse pour 100 % en masse du composant de caoutchouc.

**5.** Pneumatique selon l'une quelconque des revendications 1 à 4, dans lequel la composition de caoutchouc comprend de la silice dans une quantité de 100 à 500 parties en masse pour 100 parties en masse de composant de caoutchouc.

**6.** Pneumatique selon l'une quelconque des revendications 1 à 5, dans lequel la silice possède une surface spécifique par adsorption d'azote supérieure ou égale à 200 $m^2$ / g.

**7.** Pneumatique selon l'une quelconque des revendications 1 à 6, dans lequel la composition de caoutchouc comprend du noir de carbone dans une quantité de 0,1 à 200 parties en masse pour 100 parties en masse de composant de caoutchouc.

**8.** Pneumatique selon l'une quelconque des revendications 1 à 7, dans lequel le caoutchouc butadiène styrène possède 28 % en masse ou moins d'un composant dérivé du monomère butadiène et possédant une configuration vinylique sur la base de 100 % en masse des composants dérivés d'un monomère butadiène.

**9.** Pneumatique selon l'une quelconque des revendications 1 à 8, dans lequel le composant de caoutchouc comprend, sur la base de 100% en masse de celui-ci, 10 % en masse ou moins d'un caoutchouc à base d'isoprène.

**10.** Pneumatique selon l'une quelconque des revendications 1 à 9,
dans lequel la composition de caoutchouc comprend un agent de couplage au mercapto silane.

**11.** Pneumatique selon l'une quelconque des revendications 1 à 10,
dans lequel la composition de caoutchouc comprend un plastifiant polaire dans une quantité de 0,1 à 100 parties en masse pour 100 parties en masse de composant de caoutchouc.

**12.** Pneumatique selon la revendication 11,
dans lequel le plastifiant polaire possède une température de transition vitreuse inférieure ou égale à -80° C.

**13.** Pneumatique selon l'une quelconque des revendications 1 à 12, comprenant une bande de roulement de base.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018189496 A1
- WO 2011078859 A1
- JP 2013091757 A
- JP 2013091755 A